# EUROPEAN PATENT APPLICATION

(11) **EP 2 068 463 A1**
(43) Date of publication of application: **10.06.2009**
(21) Application number: 07828953.5
(22) Date of filing: 01.10.2007
(51) Int. Cl.: H04B 7/26, H04B 1/707, H04Q 7/22

(54) **TRANSMISSION POWER CONTROL METHOD, USER TERMINAL, AND BASE STATION**

(30) Priority: 03.10.2006 JP 2006272346
(71) Applicant: NTT DoCoMo, Inc., Chiyoda-ku Tokyo 100-6150 (JP)
(72) Inventor: HIGUCHI, Kenichi, Tokyo 100-6150 (JP); SAWAHASHI, Mamoru, Tokyo 100-6150 (JP)
(74) Representative: HOFFMANN EITLE
(86) International application number: PCT/JP2007/069213
(87) International publication number: WO 2008/044528

(57) **Abstract**

A transmission power control method in a communication system including a base station and a user terminal which performs transmission power control in packet-based radio access includes the steps of transmitting, by the user terminal, a packet; evaluating, by the base station, whether interference caused by the packet is above a predetermined threshold, if the packet is transmitted from another cell; generating, by the base station, transmission power control information for controlling transmission power of the user terminal based on the evaluation result of the interference and transmitting the transmission power control information to the user terminal; and determining, by the user terminal, whether the user terminal controls transmission power based on the transmission power control information, upon transmitting a retransmission packet corresponding to the packet.

## Description

### TECHNICAL FIELD

The present invention relates to a transmission power control method, a user terminal, and a base station.

### BACKGROUND ART

In a mobile communication system, each channel engaged in communication suffers from both interference caused by other communication channels and multipath interference caused by the user's own communication channel. These kinds of interference limit the subscriber capacity. Accordingly, each channel is transmitted with minimum power, while required quality in each channel is satisfied.

Closed-loop transmission power control is a type of transmission power control used in W-CDMA (Wideband Code Division Multiple Access) and its evolved version of E-DCH (Enhanced Dedicated Channel). According to closed-loop transmission power control on the uplink, the base station measures quality of the communication channel. Based on the measurement result, transmission power control bits are transmitted using a loop-back channel (DPCCH: Dedicated Physical Control Channel) so that required quality of the communication channel is satisfied. In W-CDMA and E-DCH, each user terminal (UE: User Equipment) transmits signals on a dedicated channel, such that multiple user terminals simultaneously communicate with the base station. For this reason, the effect (interference) exerted from adjacent cells and observed by the base station is averaged due to statistical multiplexing effects. Since the fluctuation of other-cell interference is small, the transmission power control is performed only based on received quality for each user terminal. In this manner, closed-loop transmission power control can manage other-cell interference (see "W-CDMA MOBILE COMMUNICATIONS SYSTEM" edited by Keiji Tachikawa, Japan, March 15, 2002, page 126-127).

### DISCLOSURE OF INVENTION

### [PROBLEM(S) TO BE SOLVED BY THE INVENTION]

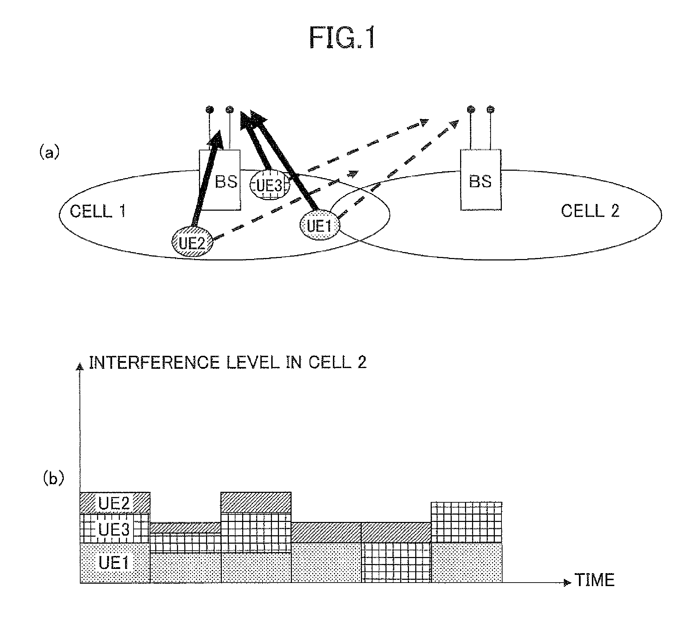

In W-CDMA and E-DCH, uplink communications are always performed on the dedicated channel as mentioned above. Fig. 1 shows interference levels in uplink communications. In Fig. 1, three user terminals (UE1, UE2, and UE3) communicate with a base station (BS) in a cell 1. The three user terminals continue to transmit signals during communications. Transmission power from these user terminals causes interference at a base station in a cell 2. Since the interference level in the cell 2 is derived by the sum of signals from the three user terminals, the effect of the overall interference level exerted by the fluctuation of signals from a single user is small. Provided that the fluctuation of the overall interference is small due to statistical multiplexing effects, closed-loop transmission power control can be appropriately performed within the own cell.

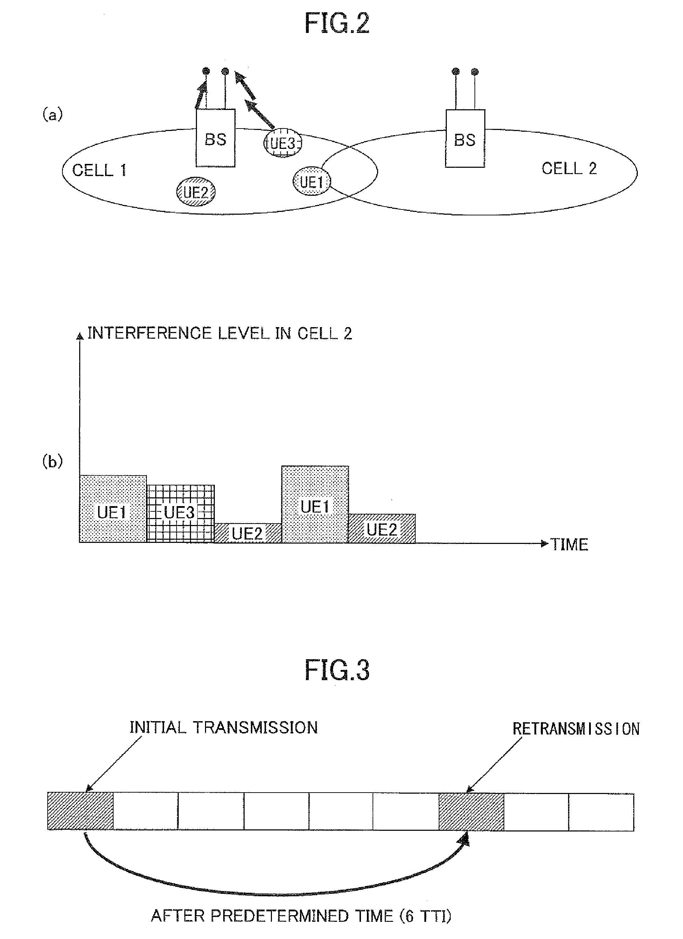

In E-UTRA (Evolved UMTS Terrestrial Radio Access) under discussion in 3GPP (3rd Generation Partnership Project), however, packet-based radio access is used. According to this packet-based radio access, the base station allocates radio resources to an optimal user terminal based on the measured channel conditions to increase throughput. For example, the user terminal UE1 situated close to the cell boundary transmits signals at a certain time interval and the user terminal UE2 situated far from the cell boundary transmits signals at another time interval. Fig. 2 shows interference levels in uplink communications. When the user terminal UE1 situated close to the cell boundary transmits signals, the interference level in the cell 2 becomes large. When the user terminal UE2 situated far from the cell boundary transmits signals, the interference level in the cell 2 becomes small. Since user terminals which transmit signals may vary from one TTI (Transmission Time Interval) to another TTI, it is difficult to control interference only by means of transmission power control within the own cell.

On the other hand, retransmission control on the E-UTRA uplink is performed according to Sync ARQ (Synchronous Automatic Repeat reQuest). In other words, retransmission is performed at predetermined timing. For example, as shown in Fig. 3, when an error is detected in an initial transmission packet, a retransmission packet is transmitted after 6 TTIs as the predetermined timing.

As mentioned above, it is difficult to control interference according to the packet-based radio access. Once interference in other cells is known at the time of an initial transmission packet, transmission power control can be achieved at the time of retransmission of the corresponding packet.

Therefore, it is a general object of the present invention to perform transmission power control at the time of retransmission in packet-based radio access to reduce other-cell interference.

### [MEANS FOR SOLVING THE PROBLEM(S)]

In one aspect of the present invention, there is provided a transmission power control method in a communication system including a base station and a user terminal which performs transmission power control in packet-based radio access, including the steps of:
transmitting, by the user terminal, a packet;
evaluating, by the base station, whether interference caused by the packet is above a predetermined threshold, if the packet is transmitted from another cell;
generating, by the base station, transmission power control information for controlling transmission power of the user terminal based on the evaluation result of the interference and transmitting the transmission power control information to the user terminal; and
determining, by the user terminal, whether the user terminal controls transmission power based on the transmission power control information, upon transmitting a retransmission packet corresponding to the packet.

In another aspect of the present invention, there is provided a user terminal which performs transmission power control in packet-based radio access, including:
a cell determining unit configured to perform cell search to determine, as non-serving cells, a predetermined number of cells with high received signal levels other than the own cell;
a grant determining unit configured to receive transmission power control information from the non-serving cells to determine whether the user terminal controls transmission power; and
a transmission power controlling unit configured to control transmission power for a retransmission packet based on the transmission power control information.

In another aspect of the present invention, there is provided a base station in communication with a user terminal which performs transmission power control in packet-based radio access, including:
an interference level evaluating unit configured to evaluate whether interference caused by a packet from a user terminal situated in another cell is above a predetermined threshold; and
a grant generating unit configured to generate transmission power control information for controlling transmission power of the user terminal situated in the other cell based on the evaluation result of the interference.

### [ADVANTAGEOUS EFFECT OF THE INVENTION]

According to an embodiment of the present invention, it is possible to perform transmission power control at the time of retransmission in packet-based radio access to reduce other-cell interference.

### BRIEF DESCRIPTION OF THE DRAWINGS

Fig. 1 shows interference levels in W-CDMA and E-DCH.
Fig. 2 shows interference levels in E-UTRA.
Fig. 3 shows uplink retransmission control in E-UTRA.
Fig. 4 shows a serving cell and non-serving cells.
Fig. 5 shows a procedure in which base stations in non-serving cells measure interference power based on an initial transmission packet from a user terminal.
Fig. 6 shows a procedure in which the user terminal controls transmission power for a retransmission packet based on notifications from the base stations in the non-serving cells.
Fig. 7 shows a procedure for retransmission power control on the time axis.
Fig. 8 shows a multiplexing scheme (TDM-based scheme) of a relative grant channel.
Fig. 9 shows a multiplexing scheme (FDM-based scheme) of a relative grant channel.
Fig. 10 shows a structure of a user terminal.
Fig. 11 shows a structure of a base station.

### DETAILED DESCRIPTION OF THE PREFERRED EMBODIMENTS

### [DESCRIPTION OF NOTATIONS]

- BS: base station
- UE1, UE2, UE3: user terminal
- 101: pilot channel-based CQI estimating unit
- 103: non-serving cell determining unit
- 105: grant determining unit
- 107: pilot channel-based CQI estimating unit
- 109: downlink data channel ACK/NACK determining unit
- 111: transmission power controlling unit
- 201: interference level evaluating unit
- 203: grant generating unit
- 205: modulating unit
- 207: multiplexing unit

### [BEST MODE OF CARRYING OUT THE INVENTION]

With reference to the accompanying drawings, a description is given below with regard to embodiments of the present invention.

### [Determination of non-serving cells]

A user terminal determines a base station to communicate data by means of cell search. When the user terminal performs initial cell search, the user terminal measures the received levels of reference signals (pilot signals) and determines the cell with the highest received level as a serving cell (own cell). In addition, the user terminal selects N cells with high received levels other than the own cell and determines the N cells as non-serving cells (where N is a number predetermined in the system). The non-serving cells may be modified (added or deleted) during call-in-progress neighboring cell search.

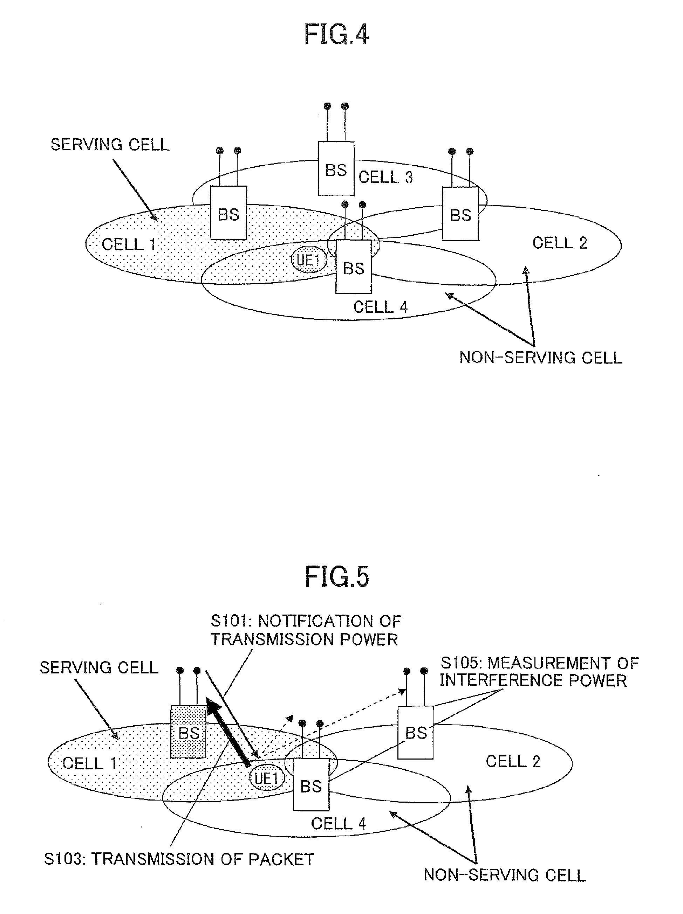

Fig. 4 shows a serving cell and non-serving cells determined by the user terminal. In Fig. 4, the user terminal UE1 selects one serving cell (cell 1) and two non-serving cells (cell 4 and cell 2).

Although soft handover is not performed in E-UTRA, the non-serving cell corresponds to a cell having the function of soft handover in W-CDMA.

According to conventional closed-loop transmission control, transmission power of the user terminal is controlled based only on transmission power control information from the base station in the own cell, as mentioned above. According to an embodiment of the present invention, on the contrary, a serving cell and non-serving cells are defined and transmission power of the user terminal is controlled based on transmission power control information not only from the base station in the serving cell but also from the base stations in the non-serving cells. A procedure for transmission power control by the base stations in the non-serving cells is described in detail below.

### [Procedure for transmission power control]

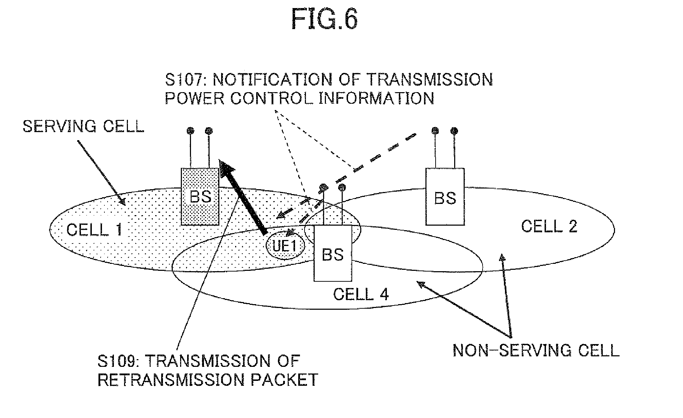

With reference to Figs. 5 and 6, a procedure for transmission power control is described below. Fig. 5 shows a procedure in which base stations in non-serving cells measure interference power based on an initial transmission packet from a user terminal. Fig. 6 shows a procedure in which the user terminal controls transmission power for a retransmission packet based on notifications from the base stations in the non-serving cells.

First, on the downlink control channel, the base station in the serving cell notifies the user terminal UE1 of initial transmission power for transmitting an initial transmission packet (S101). It should be noted that the user terminal may determine initial transmission power on its own judgment (open-loop transmission power control). In this case, the step S101 is performed within the user terminal UE1. The user terminal UE1 transmits a packet with the notified initial transmission power (S103). The base stations in the non-serving cells measure interference power caused by the packet (S105). Specifically, the base stations determine whether interference from uplink shared data channels in other cells is above a predetermined threshold, which adversely affects demodulation and decoding on a shared data channel in the own cell.

If interference is above the predetermined threshold, the base station in the non-serving cell transmits a DOWN signal to the user terminal UE1 to instruct the user terminal UE1 to decrease transmission power. If interference is below the predetermined threshold, on the contrary, the base station in the non-serving cell transmits a DTX signal to the user terminal UE1 to instruct the user terminal UE1 to maintain transmission power (S107). Information used to control transmission power of the user terminal is referred to as transmission power control information (relative grant). The transmission power control information includes the DOWN signal which instructs the user terminal to decrease transmission power and the DTX signal which instructs the user terminal to maintain transmission power.

The base station in the serving cell receives the packet, detects an error, and transmits a retransmission request to the user terminal UE1, if needed. If the user terminal UE1 which receives the retransmission request has received at least one DOWN signal from the non-serving cells, the user terminal UE1 decreases transmission power for a retransmission packet by a predetermined step size and transmits the retransmission packet (S109).

When retransmission of the retransmission is performed, the above-mentioned procedure is repeated to control transmission power for the retransmission packet.

### [Determination of initial transmission power]

The step S101 in Fig. 5 is described in detail below.

The following three approaches are possible to determine initial transmission power.
(1) The user terminal determines transmission power according to open-loop transmission power control.
   For example, if the user terminal determines that it is far from the base station based on the measurement result of the received level using a downlink pilot channel, the user terminal increases transmission power. If the user terminal determines that it is close to the base station, on the contrary, the user terminal decreases transmission power.
(2) The base station in the serving cell determines transmission power in consideration of an interference margin (Intra-Interference) within the own cell based on interference power measured from received signals.
   For example, the base station takes the interference margin within the own cell into consideration and determines transmission power which satisfies desired received quality in the user terminal.
(3) The base station in the serving cell determines transmission power in consideration of both an interference margin within the own cell and an interference margin within other cells.

For example, the base station in each cell notifies base stations in other cells of the interference margin within the own cell at predetermined time intervals. The base station in the serving cell can derive an average prediction of interference in other cells which will be caused by transmission power control. The base station determines transmission power which satisfies desired received quality in the user terminal, taking the average prediction of interference into consideration.

It should be noted that these approaches for determining initial transmission power are performed according to the information exchange between the user terminal and the base station in the own cell. Even though the above-mentioned approach (3) is used, interference in other cells is merely the average prediction. Accordingly, when the user terminal situated on the cell boundary transmits data, interference in other cells becomes large. When retransmission is needed in such cases, the procedures for transmission power control as described with reference to Figs. 5 and 6 can be used to optimize transmission power.

### [Measurement of interference power in non-serving cells]

The step S105 in Fig. 5 is described in detail below.

A type (or types) of CAZAC sequence used for the pilot channel is assigned to each cell in advance. For example, it is determined as system information in advance that X, X+1, and X+2 of the CAZAC sequence can be used in the cell 1 and that Y, Y+1, and Y+2 of the CAZAC sequence can be used in the cell 2. Information about the CAZAC sequence may be supplied to the base station in each cell by means of the information exchange via the wired transmission lines among cells.

When the CAZAC sequences used in neighboring cells are known, the base station in each cell can measure received power of the pilot signal which is received from the user terminal in the neighboring cells. In this manner, the base stations in the non-serving cells can measure the interference level in each frequency block for each TTI. It should be noted that the TTI may be referred to as a subframe and the frequency block may be referred to as a resource block.

### [Identification of transmission power control information (relative grant)]

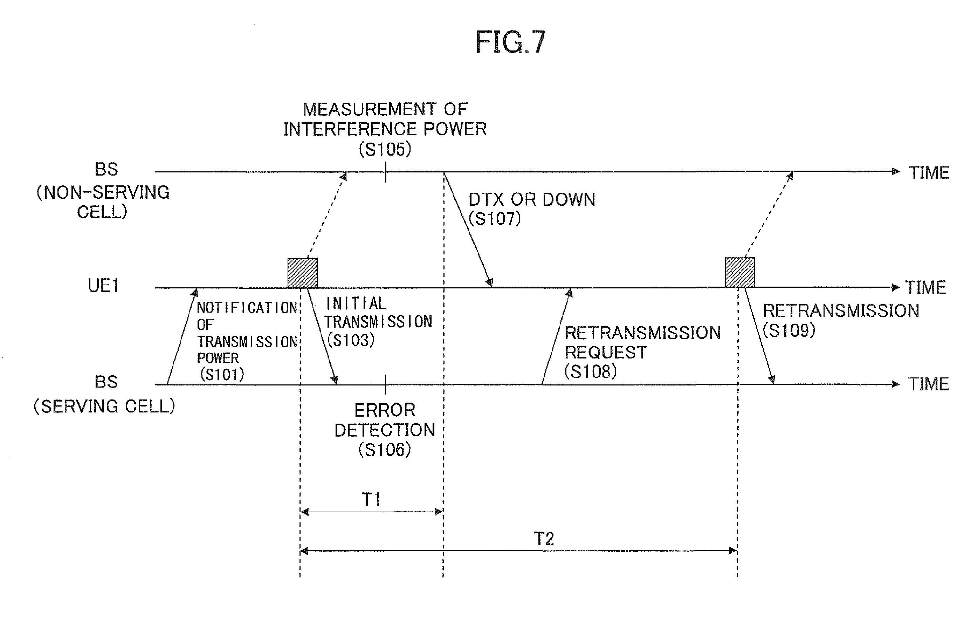

With reference to Fig. 7, the step S107 in Fig. 6 is described in detail below. Fig. 7 shows a procedure for retransmission power control on the time axis.

As mentioned above, the base station in the serving cell determines transmission power and notifies the user terminal UE1 of transmission power (S101). The user terminal UE1 transmits a packet with the notified initial transmission power (S103). The base station in the non-serving cell measures interference power caused by the packet (S105) and transmits transmission power control information (S107). On the other hand, the base station in the serving cell receives the packet, detects an error, and transmits a retransmission request to the user terminal UE1, if needed (S108). If the user terminal UE1 which has received the retransmission request receives at least one DOWN signal from the non-serving cells, the user terminal UE1 decreases transmission power for a retransmission packet by a predetermined step size and transmits the retransmission packet (S109).

It is assumed that the time interval (T1) between the time when the initial transmission packet is transmitted on the uplink shared data channel and the time when the base station in the non-serving cell transmits transmission power control information is determined in advance. As mentioned above, according to Sync ARQ, the time interval (T2) between the time when the initial transmission packet is transmitted and the time when the retransmission packet is transmitted is determined in advance. Accordingly, the time interval between the time when the transmission power control information is received on the downlink and the time when the retransmission packet is transmitted can be derived. In summary, the user terminal UE1 can identify to which initial transmission packet the received transmission power control information corresponds, based on the time when the transmission power control information is received on the downlink, the CAZAC sequence, and the frequency block. Consequently, the base station in the non-serving cell can generate transmission power control information for each CAZAC sequence without recognizing which user terminal uses which CAZAC sequence, although there has been described that the base station transmits the DOWN or DTX signal to the user terminal UE1 to instruct the user terminal to decrease or maintain transmission power. The user terminal can recognize the serving cell and the non-serving cells, demodulate the transmission power control information, and control transmission power based on the transmission power control information.

As mentioned above, transmission power control information includes the CAZAC sequence, the frequency block, and information about whether the user terminal decreases transmission power (DOWN or DTX signal). It should be noted that transmission power control information may not include the frequency block, when the channel (relative grant channel) on which the transmission power control information is transmitted is multiplexed (placed) corresponding to each frequency block on the uplink.

It should be also noted that the base station in the serving cell may transmit transmission power control information at the time of the retransmission request. In this case, the base station may select one of an UP signal used in E-DCH, the DTX signal, and DOWN signal as the transmission power control information.

### [Multiplexing of a relative grant channel]

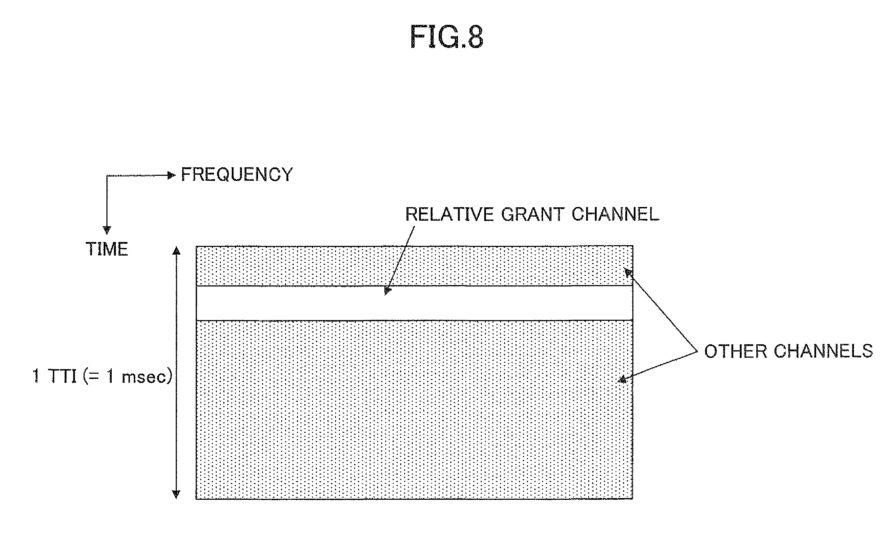

With reference to Fig. 8, an approach for multiplexing the channel on which transmission power control information is transmitted at the step S107 in Fig. 6 is described in detail below.

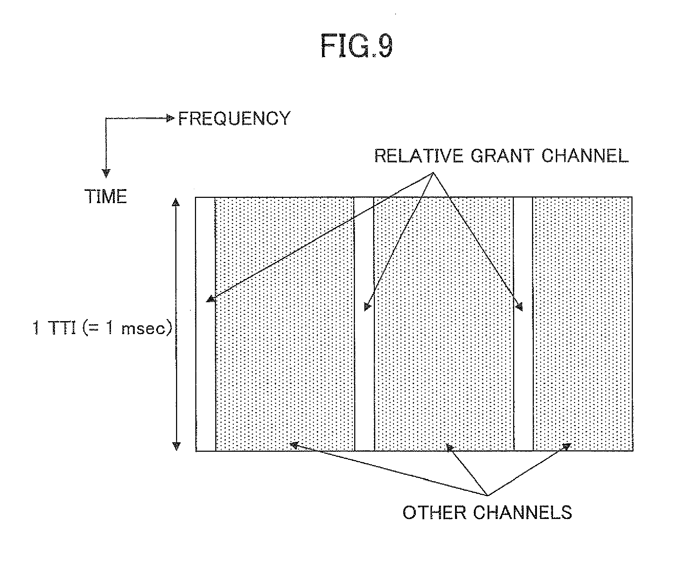

The channel on which transmission power control information (relative grant) is transmitted is referred to as a relative grant channel. In OFDM (Orthogonal Frequency Division Multiplexing) radio access, when the relative grant channel and other channels are multiplexed, the relative grant channel may be frequency-multiplexed on a predetermined subcarrier as an independent channel. Alternatively, the relative grant channel may be included in the L1/L2 control channel. For example, Fig. 8 shows the case where the relative grant channel is included in the L1/L2 control channel according to TDM, and Fig. 9 shows the case where the relative grant channel is included in the L1/L2 control channel according to FDM.

Since there are types of transmission power control information corresponding to the number of combinations of the CAZAC sequence and the frequency block, as mentioned above, it may be needed to multiplex multiple relative grant channels. When the multiple relative grant channels and other channels are frequency-multiplexed, the multiple relative grant channels may be time-multiplexed (distinguished by symbols on the time axis) or code-multiplexed (multiplied with orthogonal codes).

### [Structure of a user terminal]

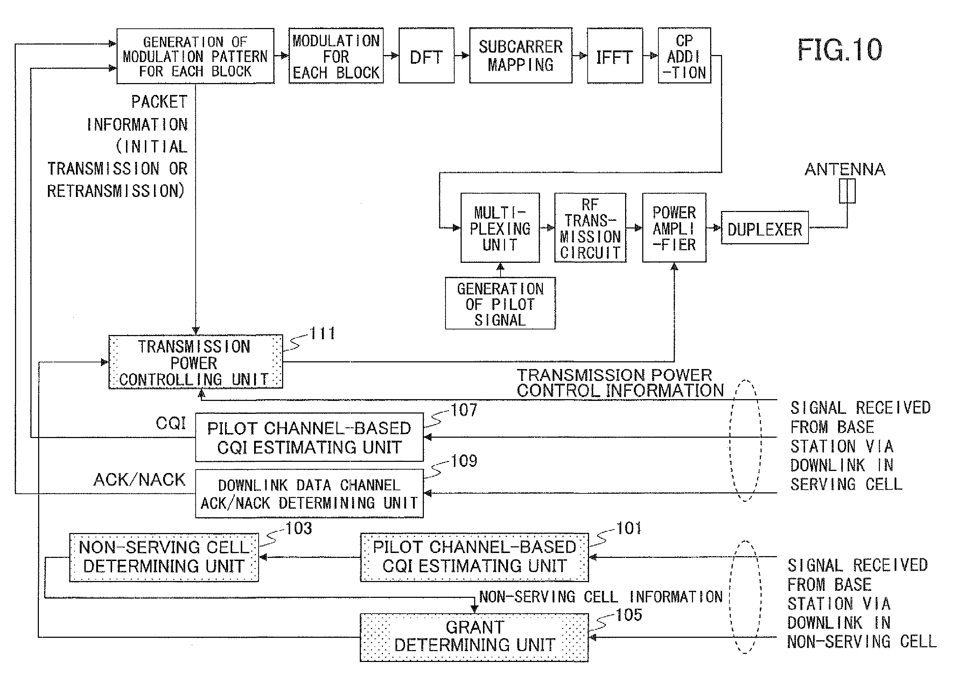

Fig. 10 shows a structure of the user terminal. The user terminal includes a CQI estimating unit 101, a non-serving cell determining unit 103, a grant determining unit 105, a CQI estimating unit 107, an ACK/NACK determining unit 109, and a transmission power controlling unit 111.

The CQI estimating unit 101 receives pilot signals from base stations in other cells (non-serving cells) and estimates channel quality (CQI: Channel Quality Indicator). The non-serving cell determining unit 103 determines the cell with the best channel quality as a serving cell and determines N cells with good channel quality other than the serving cell as non-serving cells. The grant determining unit 105 receives information on the relative grant channels from other cells. If the relative grant channels are transmitted from the non-serving cells, the grant determining unit 105 reads transmission power control information (DOWN or DTX signal). The transmission power control information is supplied to the transmission power control unit 111, which controls transmission power for a retransmission packet.

The CQI estimating unit 107 receives pilot signals from the base station in the own cell (serving cell) and estimates channel quality (CQI). The CQI is supplied to the transmission power control unit 111, which controls transmission power upon packet transmission or retransmission.

The ACK/NACK determining unit 109 determines whether an error is detected in the packet from the base station in the own cell. In the case of NACK, the ACK/NACK determining unit 109 notifies means for generating a modulation pattern for each block that the packet has to be retransmitted.

The transmission power control unit 111 controls transmission power for the packet and supplies transmission power control information to the power amplifier. Specifically, the transmission power control unit 111 determines transmission power received from the base station in the serving cell in the case of the initial transmission packet. Alternatively, the transmission power control unit 111 determines transmission power using open-loop transmission power control based on the CQI estimated by the CQI estimating unit 107. The transmission power control unit 111 controls transmission power based on the transmission power control information (DOWN or DTX signal) received from the grant determining unit 109.

### [Structure of a base station]

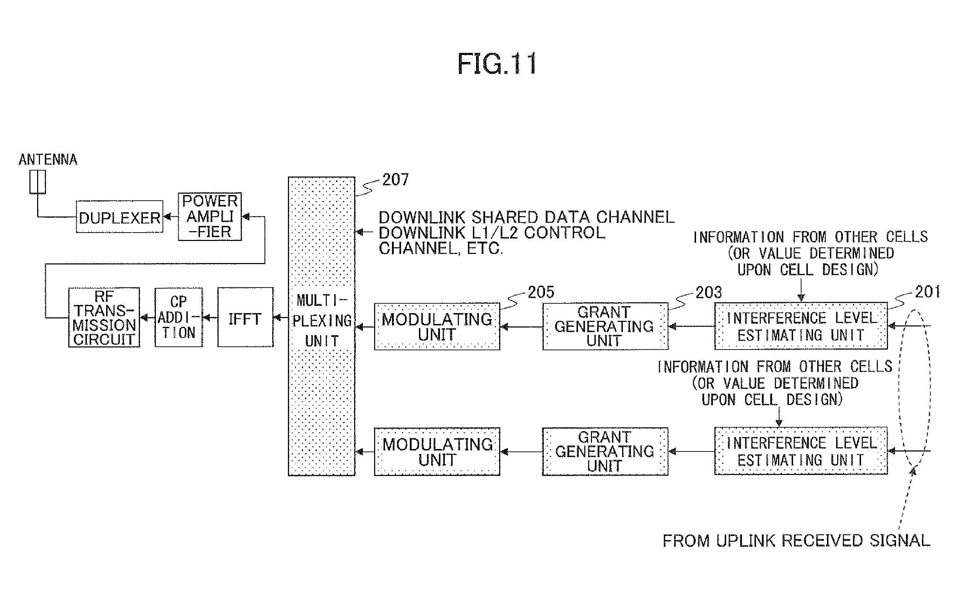

Fig. 11 shows a structure of the base station. The base station includes an interference level estimating unit 201, a grant generating unit 203, a modulating unit 205, and a multiplexing unit 207.

The interference level estimating unit 201 receives information about CAZAC sequences used in the neighboring cells from the neighboring cells (or receives information in advance upon the cell design) and estimates interference (received power) from user terminals in the neighboring cells. The grant generating unit 203 generates a DOWN signal when the interference is above a predetermined threshold and generates an UP signal when the interference is below a predetermined threshold. The modulating unit 205 modulates the relative grant channel according to a predetermined modulation scheme. The multiplexing unit 207 multiplexes the relative grant channel and other channels.

The present invention is not limited to the specifically disclosed embodiments and variations and modifications may be made without departing from the scope of the present invention.

This international patent application is based on Japanese Priority Application No. 2006-272346 filed on October 3, 2006, the entire contents of which are incorporated herein by reference.

## Claims

1. A transmission power control method in a communication system including a base station and a user terminal which performs transmission power control in packet-based radio access, comprising the steps of:
transmitting, by the user terminal, a packet;
evaluating, by the base station, whether interference caused by the packet is above a predetermined threshold, if the packet is transmitted from another cell;
generating, by the base station, transmission power control information for controlling transmission power of the user terminal based on the evaluation result of the interference and transmitting the transmission power control information to the user terminal; and
determining, by the user terminal, whether the user terminal controls transmission power based on the transmission power control information, upon transmitting a retransmission packet corresponding to the packet.

2. The transmission power control method as claimed in Claim 1, further comprising:
performing, by the user terminal, cell search and determining, as non-serving cells, a predetermined number of cells with high received signal levels other than the own cell; wherein the step of determining comprises determining whether the user terminal controls transmission power based on transmission power control information from the non-serving cells.

3. The transmission power control method as claimed in Claim 1, wherein:
the step of transmitting comprises determining, by the user terminal, transmission power according to open-loop transmission power control and transmitting the packet.

4. The transmission power control method as claimed in Claim 1, wherein the step of transmitting comprises the steps of:
determining, by a base station in communication with the user terminal, transmission power in consideration of an interference margin within the own cell and notifying the user terminal of the transmission power; and
transmitting, by the user terminal, the packet with the notified transmission power.

5. The transmission power control method as claimed in Claim 1, wherein the step of transmitting comprises the steps of:
determining, by a base station in communication with the user terminal, transmission power in consideration of both an interference margin within the own cell and an interference margin within the other cell and notifying the user terminal of the transmission power; and
transmitting, by the user terminal, the packet with the notified transmission power.

6. The transmission power control method as claimed in Claim 1, wherein:
the step of evaluating comprises evaluating interference power from the user terminal situated in the other cell based on a type of CAZAC sequence used for a pilot signal.

7. The transmission power control method as claimed in Claim 1, wherein:
the transmission power control information includes
a CAZAC sequence;
a frequency block; and
information about whether the user terminal decreases transmission power.

8. The transmission power control method as claimed in Claim 1, wherein:
the step of generating comprises frequency-multiplexing the transmission power control information on a predetermined subcarrier and transmitting the transmission power control information in the case of OFDM radio access.

9. A user terminal which performs transmission power control in packet-based radio access, comprising:
a cell determining unit configured to perform cell search to determine, as non-serving cells, a predetermined number of cells with high received signal levels other than the own cell;
a grant determining unit configured to receive transmission power control information from the non-serving cells to determine whether the user terminal controls transmission power; and
a transmission power controlling unit configured to control transmission power for a retransmission packet based on the transmission power control information.

10. A base station in communication with a user terminal which performs transmission power control in packet-based radio access, comprising:
an interference level evaluating unit configured to evaluate whether interference caused by a packet from a user terminal situated in another cell is above a predetermined threshold; and
a grant generating unit configured to generate transmission power control information for controlling transmission power of the user terminal situated in the other cell based on the evaluation result of the interference.
